# EUROPEAN PATENT APPLICATION

(11) **EP 2 253 600 A1**
(43) Date of publication of application: **24.11.2010**
(21) Application number: 09160271.4
(22) Date of filing: 14.05.2009
(51) Int. Cl.: C04B 7/02, C04B 28/00

(54) **Portland limestone calcined clay cement**

(71) Applicant: AALBORG PORTLAND A/S, 9220 Aalborg Ost (DK)
(72) Inventor: Herfort, Duncan, DK-9520, Skørping (DK); Damtoft, Jesper Sand, DK-9000, Aalborg (DK)
(74) Representative: Kitchen, Steven Richard

(57) **Abstract**

The present invention relates to a cement comprising Portland cement clinker and a clinker replacement material, wherein the clinker replacement material comprises a carbonate material and a clay material, the clay material being **characterised in that** the carbonate material and/or the clay material has been treated in such a way that no chemical reaction occurs between the clay minerals and the carbonate material.

## Description

### Field of the invention

The present invention relates to a novel type of Portland cement based on limestone and calcined clay which achieves high mechanical strengths at low clinker contents and to uses thereof.

### Background of the invention

Concrete is the most important construction material in the world. It is composed of stone and sand aggregate bound by a cementitious binder. The cementitious binder is manufactured by grinding Portland cement clinker with calcium sulphate with or without additional supplementary cementitious materials or other clinker replacement materials such as limestone. The Portland cement clinker is produced through the reaction of limestone with aluminous and ferrous raw materials at 1450-1500°C in a rotary kiln.

The energy consumption needed to heat the material to this high temperature combined with the chemical decomposition of limestone which liberates CO₂ to the atmosphere results in an emission of typically 0.8 kg CO₂ per kg clinker produced.

The increasing demand for housing, civil works and industrial buildings in the developing parts of the world has led to a sharp rise in demand for cement. It is expected that the global cement production in 2050 will be more than double the 2010 level. Therefore, there is an urgent need to increase the cement production capacity whilst at the same time reducing the CO₂ emissions associated with the production of Portland cement clinker.

An effective way of increasing cement capacity whilst simultaneously reducing CO₂ emissions is to replace part of the clinker by supplementary cementitious materials such as fly ash or ground granulated blastfurnace slag. However, the use of supplementary cementitious materials is limited by the availability of suitable materials and technical constraints in the present art which in turn limits the content of clinker which may be substituted.

Portland-limestone cements are widely used in many parts of the world including Europe where they are classified according to EN 197-1:2000 as CEM II/A LL, which can contain up to 20 weight % limestone, or CEM II/B LL cements, which can contain up to 35 weight % limestone.

As a rule, the substitution of Portland cement clinker in the ground cement with limestone of similar or high surface area results in lower strengths since most of the limestone does not react and its effect is mainly one of dilution.

One notable exception is when the limestone is used in conjunction with mineralised clinker as taught in the European patent specification EP 0 640 062 B1 where higher strengths are obtained than would predicted by the dilution effect on its own. However, even in this case, there is a limit to how much limestone can be added to the cement (generally in the region of 10 to 15% clinker replacement) before strengths are significantly reduced. It is of course important when evaluating the information disclosed by EP 0 640 062 B1 or elsewhere in the literature that other factors which may effect strengths such as the fineness of the Portland cement clinker fraction after grinding, or the water to binder ratio (in this case water/(clinker + limestone)) are kept constant. Despite the largely diluting effect of limestone on the standard mortar strengths Portland limestone cements account for approximately a quarter of all cements sold in Europe where it is used to produce relatively low strength concrete and where its main role is to achieve the required cement contents in the concrete mix needed for optimum rheology.

Limestone addition therefore plays an important role in significantly reducing CO₂ emissions from clinker production associated with the production of about a quarter of the concrete produced in Europe. However, for the remaining concrete where the amounts of other types of Portland cements needed to achieve the concrete strengths specified for a given application are sufficient for optimum rheology and/or specified by the relevant concrete standards Portland limestone cement are generally unsuitable.

For higher strength concretes, alternative clinker replacement materials to limestone are needed to reduce the cost of cement production and lower CO₂ emissions. A prerequisite for these materials is that they contribute to strength development. Two major classes of these materials exist in the European cement standard, i.e. granulated blastfurnace slag (GBFS), and natural or artificial pozzolans including siliceous fly ash as the most important material in the latter class. Unfortunately, however, the availability of these materials is limited. In Europe for example, waste materials such as GBFS and siliceous fly ash are almost fully utilised either in cement production or added directly to the concrete, whilst natural pozzolans such as volcanic ash are not evenly distributed geographically.

One approach to resolve this dilemma is to produce another class of pozzolans by heating clay to between 500ºC and 800ºC as, for example, taught in the US patent US5626665. Unfortunately, the reactivity of the calcined clay varies according to clay type (Mielenz, R.C., Witte, L.P. & Glantz, O.J. (1950). STP-99, American Society for Testing of Materials. Philadelphis. 43-91. Only mixtures with kaolin obtain strength comparable to pure Portland cement. Intermediate results are obtained by using calcined smectite type clays, whereas illite exhibits limited reactivity.

The result of this is that for most types of clays found in sufficient amounts the contribution to strength has not been satisfactory.

US Patent US4737191 describes a product comprising an intimate mixture of clay and limestone which is heat-treated in a CO₂ atmosphere at 700-900 °C whereby a chemical reaction between limestone and clay is promoted. Thus, a chemical reaction occurs between the clay minerals and the carbonate. However, the strength reported is significant lower than a state-of-the art pure Portland cement.

US4509985 A describes a totally different approach to producing low CO₂ cements by the use of alkali activated alumino silicate systems, often termed geopolymers, as alternative to Portland cement based systems. These rely on a very high pH, typically higher than 14 in the mix water, which is needed to activate the alumino silcates such as calcined clay in systems that contain little or no Portland cement. The content of alkalis are stoichiometrically balanced with the available aluminate present in these systems so that the main reaction products formed in the hardened cement are framework silicates which can be best described as poorly crystalline zeolites. A major drawback of these cement types is that the alkali activator, such as NaOH, NaCO₃ or water glass, needs to be added with the mix water, or as additional components so that the cement cannot be delivered as a single component system wherein only water needs to be added. Considerable energy is also required to produce these soluble forms of alkalis and further an initial concrete solution with a high pH is formed, which is undesirable for health and safety reasons.

Thus, there is a need in the art for cements having a satisfactory strength but which uses less energy and emits lower amounts of CO₂ when produced.

There is also a need in the art for cements having a lower clinker content which may be delivered as a single dry powder.

### The object of the invention

One object of the invention is to produce a cement at lower net CO₂ emissions having the same level of concrete performance.

Another object of the invention is to produce cement with a reduced emission of CO₂ for the delivery to the end user as a single dry powder.

Surprisingly, the present inventors found that use of a clinker replacement material comprising a carbonate material and a clay material which had been treated in such a way that no chemical reaction occurs between the clay minerals and the carbonate material prior to mixing with the Portland cement clinker resulted in a cement having the desired properties. The clay material is preferably either calcined clay or calcium aluminosilicate glass.

Accordingly, in a first aspect the invention relates to a cement comprising Portland cement clinker and a clinker replacement material wherein the clinker replacement material comprises a mixture of a carbonate material and a clay material, where the carbonate material and/or the clay material has been treated in such a way that no chemical reaction occurs between the clay minerals and the carbonate material prior to mixing with the Portland cement clinker. The clay material is preferably selected from calcined clay and calcium aluminosilicate glass.

The inventors further surprisingly found that the ratio of carbonate material and clay material in the clinker replacement material has a significant impact on the strength of the concrete produced therefrom.

In a second aspect, the invention relates to a cement comprising Portland cement clinker and a clinker replacement material where the clinker replacement material comprises a mixture of a carbonate material and a clay material wherein the ratio of clay material to carbonate material in the clinker replacement material is between 0.03 and 0.95, preferably 0.03 to 0.75, more preferably 0.03 to 0.50, in particular 0.03 to 0.25.

Further, the invention relates to the use of the inventive clinker replacement material for the production of cement with a reduced emission of CO₂.

The inventors further surprisingly found that the use of alkali sulphates, which are much less expensive forms of alkali involving less energy in its production may replace the use of solubilised high alkali when producing a cement having an increased strength even at high contents of clinker replacement materials. Furthermore, this form of alkali does not result in a very high pH when initially dissolved in the mix water which is a serious health and safety issue in general use. Thus, the inventors have found it possible to produce a cement mixture which has a high content of clinker replacement material and may be delivered to the end user as a single dry powder. Thus, transportation and handling costs are lowered and less CO₂ is emitted while handling the cement. Further, this increases the easiness of handling the concrete by the end-user.

Thus, in a third aspect the invention relates to a Portland cement comprising Portland cement clinker, a clinker replacement material and an alkali sulphate.

In another aspect the invention relates to the use of alkali sulphates for the production of cement with a reduced emission of CO₂ for the delivery to the end user as a single dry powder.

### Definitions:

Throughout this specification, the chemical composition of Portland cement and limestone are as defined in the European harmonised standard for common cements, EN 197-1:2000, unless otherwise stated. The contents of limestone and calcined clay (calcined clay is treated here as a major constituent) are calculated in relation to the sum of minor and major constituents in accordance with EN 197-1:2000, and where calcium sulphate additions are not included in the calculation. Unless otherwise stated, the sulphate content is assumed to be optimised to an SO₃ content of up to 4.0% in the final cement, and the strengths mentioned refer to mortar strengths determined by the European standard EN 196-1.

The determination of the specific surface area of the carbonate material is performed using the Blaine method described in EN 196.

The determination of the size distribution of materials in this invention is according to ASTM C 430-96(2003).

"Highly alkaline forms of alkali" are defined herein as alkalis (normally sodium or potassium hydroxide) which dissolve congruently in water to give a highly alkaline solution, or sodium or potassium carbonate or water glass which react rapidly with calcium in Portland cement to give a highly alkaline solution in fresh concrete. By highly alkaline solution is meant a solution having a pH of 13 or above.

"Low alkaline forms of alkali" are defined herein as alkalis which dissolve congruently in water to give an essentially neutral solution in terms of pH, or which result in a gradual increase in alkalinity in concrete above a pH of 12 as the sulphate precipitates as so called "AFt" or "AFm" phases over the first few days of hydration "Low alkaline forms of alkali" according to the present invention are preferably alkali sulphates, preferably selected among NaSO₄ or K₂SO₄, aphthitalite (Na,K)₂(SO₄)₂, calcium-langbeinite Ca₂K₂(SO₄)₃, or mixtures or hydrated products thereof. In a preferred embodiment the low alkaline form of alkali is selected among NaSO₄ or K₂SO₄.

### Description of the invention

Surprisingly, a new class of novel cements produced from mixtures of calcined clay, limestone filler and Portland cement (clinker + sulphate retarder) which are the subject of this invention have been shown to result in significantly higher strengths at practically all levels of clinker replacement than would be expected from the individual binary systems alone, i.e. Portland cement + limestone, or Portland cement + calcined clay. The surprising effect is found when treating the raw materials in such a way that no chemical reaction occurs between the clay minerals and the limestone, either by calcining the clay separately before mixing with limestone, or by keeping the calcination temperature sufficiently low at less than 700°C so that no reaction between the constituents takes place.

Accordingly, in a first aspect the invention relates to a cement comprising Portland cement clinker and a clinker replacement material, wherein the clinker replacement material comprises a carbonate material and a clay material, where the carbonate material and/or the clay material is treated in such a way that no chemical reaction occurs between the clay minerals and the carbonate material. Preferably, the clay material is selected from calcined clay and calcium aluminosilicate glass.

The invention further relates to a method of producing a cement comprising Portland cement clinker and a clinker replacement material comprising the steps of a) providing a carbonate material and a clay material, b) treating said carbonate material and said clay material, optionally in a mixture, in such a way that no chemical reaction occurs between the clay minerals and the carbonate material when subsequently mixed, c) mixing said carbonate material and said clay material, and d) blending the mixture of a carbonate material and a clay material with a Portland cement clinker.

One way of ensuring that no chemical reaction occurs between the clay minerals and the carbonate material is by processing the clay minerals and the carbonate material separately. The clay material is processed by heat treatment, whereby calcined clay or calcium aluminosilicate glass is formed. Thus, in a preferred embodiment, the invention relates to a cement as defined above, wherein the clay material is heat-treated separately before mixing with the carbonate material.

Another way of ensuring that no chemical reaction occurs between the clay minerals and the carbonate material is by processing the clay minerals and the carbonate material in a mixture at a temperature of less than 800°C, and preferably less than 700°C. The exact temperature may depend on the materials used but are generally between 500ºC and 800ºC, preferably 500 to 700 ºC.

Accordingly in one embodiment, the invention relates to cement wherein the carbonate material and the clay material is calcined in a mixture at a temperature of less than 800°C, and preferably less than 700 °C.

In one embodiment, the clay material is calcium aluminosilicate glass. In another embodiment, the clay material is calcined clay.

It was found that it is preferable to use clay that has been calcined by heat-treating the clay separate from the other constituents of the clinker replacement material at a temperature sufficient to a) dehydroxylate the clay to a chrystallographically amorphous material, and b) prevent the formation of high temperature alumino-silicate phases such as mullite. The temperature at which these requirements are met may vary between clay materials but are generally between 500ºC and 800ºC, preferably 500 to 700 ºC.

Thus, in a preferred embodiment, the invention relates to a cement as above wherein the clay material is calcined clay produced separately from the carbonate material, at a temperature of between 500ºC and 800ºC, preferably 500 to 700 ºC.

The clay material according to the invention is preferably produced in a rotary kiln or fluid bed furnace.

The carbonate material according to the invention is preferably selected from the group comprising limestone, magnesium carbonate, calcium magnesium carbonate, or mixtures thereof.

It was found that even high contents of clinker replacement materials could produce cement with a sufficient strength, and, even in some instances, an increased strength. Accordingly, in a preferred embodiment of the invention, the cement comprises 5 to 90 %, preferably 10 to 90%, more preferably 15 to 90% of clinker replacement material.

It was further found that the ratio of calcined clay to carbonate material in the clinker replacement material has a significant impact on the resulting strength of the concrete produced from the cement according to the invention. Thus, in a preferred embodiment the invention relates to a cement comprising clinker replacement material wherein the ratio of calcined clay to carbonate material in the clinker replacement material is between 0.03 and 0.95, preferably 0.03 to 0.75, more preferably 0.03 to 0.50, in particular 0.03 to 0.25.

Suitable clays providing the unexpected good performance with carbonate material such as limestone have been found to belong to the kaolin group such as kaolinite, dickite, nacrite or halloysite. Even more surprisingly, it has been discovered that acceptable strengths can also be obtained using clays of the smectite group including dioctahedral smectites such as montmorillonite and nontronite and trioctahedral smectites such as saponite, or clays of the vermiculate group. This opens the possibility of using clays which are much more widely available than kaolin since, in the conventional art, without limestone these clays are unable to provide a high enough contribution to strength for real cuts in CO₂ emissions for the same concrete strength achieved by conventional Portland cements.

Thus, the clay material used according to the invention may be produced from clay predominately consisting of clay minerals belonging to the kaolin group (such as kaolinite, dickite, nacrite or halloysite), or the smectite group (including dioctahedral smectites, such as montmorillonite and nontronite and trioctahedral smectites such as saponite), or the vermiculite group, or mixtures thereof.

Preferably, the Portland cement clinker used according to the invention has a C₃S content of greater than 30% by weight, preferably greater than 50%, more preferably greater than 70%, calculated according to the ASTM standard, C150-04.

Preferably, the Portland cement clinker used according to the invention has an aluminium content of less than 10% by weight, preferably less than 8%, more preferably less than 6% expressed as Al₂O₃.

Preferably, the cement clinker is ground to a specific surface area using the Blaine method described in EN 196 of 150-1000 m²/kg, preferably 200-900 m²/kg, more preferably 300-700 m²/kg.

Preferably, the carbonate material is ground to a specific surface area using the Blaine method described in EN 196 of 200-3000 m²/kg, preferably 200-2000 m²/kg, more preferably 300-1800 m²/kg, in particular 300 - 1500 m²/kg.

Preferably, the calcined clay is ground to a 45µm residue, determined according to ASTM C 430-96(2003), of greater than 0.5% by weight of the calcined clay, preferably greater than 2%, more preferably greater than 10%, in particular greater than 20%, i.e. the fraction of material coarser than 45 µm is preferably greater than 0.5% by weight of the calcined clay, preferably greater than 2%, more preferably greater than 10%, in particular greater than 20%. Such cement results in lower water demand and therefore improved concrete flowability, but generally lower strengths.

One embodiment of the invention relates to a concrete material comprising cement as defined in the present application.

Accordingly, one embodiment of the invention relates to the use of a clinker replacement material as defined above for the production of cement with a reduced emission of CO₂.

Although the surprising benefits of combining limestone and calcined clay according to the invention result in higher strengths than the systems containing either calcined clay or limestone as the sole replacement material at the same level of clinker replacement, real cuts in CO₂ emissions for the same concrete strength obtained using convention Portland cements become difficult to achieve at clinker contents less than about 60% for heat-treated smectites and vermiculites and 50% for heat treated kaolins.

It is generally believed that an increased content of clinker replacement material in the cement can be obtained by introducing a solubilised high alkaline form of alkali when producing the concrete which results in a highly alkaline solution in the mix water and aqueous phase in the concrete. The solubilised high alkaline form of alkali first activates the calcined clay or glass due to the high pH of the aqueous phase, then stabilizes an alkali alumino silicate hydrate gel (i.e. a poorly crystalline zeolite) along side the so called C-S-H hydrate phase formed from the reaction of the Portland cement clinker with the calcined clay and a calcium carbo aluminate hydrate phase which forms from the reaction between the limestone, calcined clay and Portland cement clinker.

Whilst the formation of the alkali alumino silicate hydrate gel through the addition of soluble alkalis to cement is not in itself novel, it does, however, underline that the invention described herein relating to the synergy between calcined clays and limestone can by applied to clinker contents of less than 50 or 60 weight % depending on the type of clay. Accordingly, in a preferred embodiment of the invention the cement further comprises a solubilized form of alkali. The solubilized form of alkali may be provided on site when mixing the concrete.

However, a surprising novel method of achieving this effect has been discovered where instead of using a soluble highly alkaline form of alkali (normally sodium or potassium hydroxide which dissolves congruently in water to give a highly alkaline solution, or sodium or potassium carbonate or water glass which reacts rapidly with calcium in Portland cement to give a highly alkaline solution in fresh concrete), alkali activation and stabilisation of the alkali alumino silicate gel can also be achieved by adding a soluble low alkaline form of alkali, such as an alkali sulphate in stead. Thereby, the alkali may be added as a dry powder to the cement which significantly reduces costs and makes the handling more safe and easy for the end-user.

It has been found that this can be best achieved by carefully balancing the total aluminate content present with the alkalis, carbonate and sulphate so that the following condition is met;

Molar ratio (Na₂O_{eq} + SO₃ + CO₂) / Al₂O₃ = 0.8-1.2, preferably 0.9-1.1, and most preferred 1, where Na₂O_{eq} = Na₂O + 0.65K₂O

This ensures that the alumina stoiciometrically balanced by alkalis forms a zeolite-like phase, and excess alumina reacts with the sulphate and carbonate present to form calcium monosulfo aluminate hydrate and calcium monocarbo aluminate hydrate phases (which are both types of so-called AFm phases well known to someone skilled in the art of Portland cement chemistry), which effectively reduce porosity and increase strength. The Portland cement clinker supplies the calcium needed for these reactions. The Portland cement clinker is also important because it allows alkali sulphates to be used in the activation of the calcined clay. The alkali sulphates react initially with the aluminate present in the Portland cement clinker and increase the pH of the aqueous solution to between 13 and 14. This is sufficient to activate the calcined clay and facilitates the formation of zeolite phases after two or three weeks with the formation of calcium silicate hydrates directly from the Portland cement providing sufficiently high early strengths over the first few days. These hydrid Portland cement - alkali activated alumino silicate systems, wherein alkali sulphates are included as the alkali activator, have a clear advantage over conventional alkali activated alumino silicate systems because the cement can be delivered to the end user as a single dry powder which only requires the addition of water to produce the concrete or mortar instead of two component systems which must be mixed on site. Furthermore, the production of alkali sulphates requires much less energy than alkali hydroxides, carbonates or water glass, and is a major component in waste materials such as by-pass dust from Portland cement clinker production.

Accordingly, in one embodiment the cement according to the invention further comprises a low alkaline form of alkali. Preferably, the low alkaline form of alkali is selected among alkali sulphates, preferably selected among NaSO₄ or K₂SO₄, aphthitalite (Na,K)₂(SO₄)₂, calcium-langbeinite Ca₂K₂(SO₄)₃, or mixtures or hydrated products thereof. In a preferred embodiment, the low alkaline form of alkali is selected among NaSO₄ or K₂SO₄. The invention thus further relates to the use of a clinker replacement material as defined above and a low alkaline form of alkali for the production of cement with a reduced emission of CO₂.

The benefits of using of a low alkaline form of alkali in Portland cements are believed to constitute a surprising and novel invention in itself. Thus, the invention further relates to a Portland cement comprising Portland cement clinker, a clinker replacement material and a low alkaline form of alkali. Preferably, the clinker content of the cement in this inventive embodiment is less than about 70%, and preferably less than about 60% for heat-treated smectites and vermiculites and less than about 60%, and preferably less than about 50% for heat-treated kaolins. Preferably, the low alkaline form of alkali is added to the cement as a dry powder.

Preferably, the low alkaline form of alkali is selected among alkali sulphates, preferably selected among NaSO₄ or K₂SO₄.

Preferably, the cement according to the invention has a molar fraction of the constituents of the cement such that (0.15MgO + Na₂O_{eq} + SO₃ + CO₂) / Al₂O₃ is greater than 0.7 and less than 1.3, preferably greater than 0.8 and less than 1.2, or in particular greater than 0.9 and less than 1.1, where Na₂O_{eq} is Na₂O + 0.65K₂O, and wherein the cement contains more than 1 weight % sodium or potassium sulphate, preferably more than 3% sodium or potassium sulphate, or in particular more than 5% sodium or potassium sulphate.

The invention further relates to a concrete material comprising a cement according to the above. Further the invention relates to the use of a low alkaline form of alkali as defined above for the production of cement with a reduced emission of CO₂ for the delivery to the end user as a single dry powder.

### Examples

### Example 1

The clay in this example is 'Lillebælt' clay, which consist of 40-45% illite, 25-30% kaolinite, and 25-30% smectite. The clay was calcined at 750°C for 20 minutes. The reference cement with no limestone or calcined clay consists of 100% Portland cement containing 5% gypsum and ground to a Blaine surface area of 414 m²/kg, and with a mineral composition calculated by the Bogue method according to ASTM C150 -07, of 57% C₃S, 18% C₂S, 7% C₃A, 9% C₄AF.

**Table 1**

| | | | | | | | **Referencecement** |
|---|---|---|---|---|---|---|---|
| Limestone [%], Ground separately to an Blaine surface area of 1143 m²/kg | 100 | 70 | 60 | 50 | 40 | 0 | 0 |
| Calcined "Lillebælts" clay [%], Ground separately to an Blaine surface area of 1176 m²/kg | 0 | 30 | 40 | 50 | 60 | 100 | 0 |
| 28 day cement strength [MPa] | 47 | 51 | 52 | 55 | 53 | 44 | 64 |
| cement content in concrete given in kg/m³ needed to achieve 35 MPa at a water/cement ratio of 0.50 | 409 | 376 | 369 | 349 | 362 | 436 | 300 |
| Net CO₂ emission from cement per m³ concrete | 258 | 240 | 236 | 224 | 234 | 286 | 270 |
| Net CO₂ reduction in CO₂ emission from cement per m³ concrete compared to 100% Portland cement | 5 | 11 | 12 | 17 | 13 | -6 | |

This example shows that the effect on 28 day EN 196-1 mortar strengths of replacing 35% Portland cement with limestone is slightly better than 35% replacement with calcined 'Lillebælt' clay. When this is converted to the amount of cement needed to achieve the same concrete performance, the cement produced from 35% limestone results in a net reduction in CO₂ emissions of 4%, whilst the cement produced from 35% calcined "Lillebælts" clay results in an increase in CO₂ emissions of 6%. A 50/50 mix of calcined clay and limestone (still at a 35% level of overall clinker replacement) results in a reduction in net CO₂ emission of 17% at the same concrete performance

### Example 2

The clay in this example was produced from calcined kaolin from the Danish island of Bornholm (metakaolin) by heat-treating it to 700°C for 30 minutes. The kaolinite content was enriched to approximately 90% prior to the heat treatment. Both the limestone and the reference Portland cement were taken from the same batch as used in Example 1.

**Table 2**

| | | | | | | **Reference cement** |
|---|---|---|---|---|---|---|
| Limestone [%]ground separately to an Blaine surface area of 1143 m²/kg | 100 | 76 | 51 | 26 | 0 | 0 |
| metakaolin [%] ground separately to an Blaine surface area of 957 m²/kg | 0 | 24 | 49 | 74 | 100 | 0 |
| 28 day cement strength [MPa] | 41 | 49 | 58 | 59 | 49 | 57 |
| cement content in concrete given in kg/m³ needed to achieve 35 MPa at a water/cement ratio of 0.50 | 417 | 349 | 295 | 290 | 349 | 300 |
| Net CO₂ emission from cement per m³ concrete | 247 | 209 | 179 | 178 | 216 | 270 |
| Net CO₂ reduction in CO₂ emis- sion from cement per m³ concrete compared to 100% Portland cement | 9 | 23 | 34 | 34 | 20 | |

This example shows that the effect on 28 day mortar EN 196 strengths of replacing 40% Portland cement with metakaolin results in a net reduction in CO₂ emission of 20% compared to 9% for limestone. As in Example 1, where the mortar strengths are converted to the amount of cement needed to achieve the same concrete performance, significant CO₂ reductions can be achieved by mixing the limestone and kaolin with the best results achieved at limestone/metakaolin ratios of 26 and 51 % giving a net reduction in CO₂ emission of 34%. Even higher reductions are probably achieved at an optimum limestone/metakaolin ratio of 35 to 40% limestone.

### Example 3

The clay in this example is 'Holmehus' clay from central Jutland, which consists of 85 to 90% smectite, with the remaining 10 to 15% consisting of minor illite and quartz. The clay was calcined at 750°C for 20 minutes. Both the limestone and the reference Portland cement were taken from the same batch used in Example 1.

**Table 3**

| | | | | **Reference cement** |
|---|---|---|---|---|
| Limestone [%], Ground separately to an Blaine surface area of 1143 m²/kg | 100 | 50 | 0 | 0 |
| Calcined "Holmehus" clay [%], Ground separately to an Blaine surface area of 924 m² | 0 | 50 | 100 | 0 |
| 28 day cement strength [MPa] | 48 | 57 | 44 | 64 |

### Example 4

This example shows the effect of targeting the correct composition of hybrid Portland cement - alkali activated alumino silicate systems wherein the alkali activator was added as sodium sulfate. The white Portland cement with no limestone or calcined clay consisted of 100% Portland cement (including 3% gypsum) and ground to a Blaine surface area of 382 m²/kg, and with a mineral composition calculated by the Bogue method according to ASTM C150 -07, of 69% C₃S, 20% C₂S, 5% C₃A, and 1% C₄AF.

**Table 4**

| | | | | **Reference cement** |
|---|---|---|---|---|
| White Portland cement (wt%) ground separately to an Blaine surface area of 382 m²/kg and a 45µm residue of 1% | 48.0 | 48.0 | 48.0 | 100 |
| metakaolin (wt%), ground separately to an Blaine surface area of 957 m²/kg_{.} | 52.0 | 40.5 | 38.0 | |
| NaSO₄, wt% | 0 | 11.5 | 11.0 | |
| Limestone, wt% | 0 | 0 | 3.0 | |
| 28 day strength, MPa | 42 | 64 | 75 | 72 |
| Contents of key chemical components | | | | |
| Al₂O₃, wt% | 23.1 | 18.3 | 17.5 | |
| Na₂O, wt% | 2.1 | 5.2 | 4.8 | |
| SO₃, wt% | | 6.8 | 4.8 | |
| CO₂, wt% | | | 1.3 | |
| (Na₂O + SO₃ + CO₂) / Al₂O₃ molar ratio | 0.14 | 0.89 | 0.98 | |

This example shows that by targeting the correct composition, all of the anhydrous constituents in the cement react to form low density hydrate phases, in this case C-S-H, the so called AFm phases, calcium monocarbo aluminate hydrate and calcium monosulfo aluminate hydrate, and a poorly crystalline framework silicate analogous in terms of composition and crystal structure to natrolite. This results in minimum porosity and maximum strengths after complete hydration so that the addition of the correct amount of sodium sulphate results in much higher strengths than the Portland cement - metakoalin mix on its own. In this example, although the reactions had not gone to completion at 28 days, the reactions were sufficiently advanced to result in a significant increase in the 28 day EN 196 mortar strength.

### Example 5

Other tests have shown similar trends with a wider range of clays wherein it has become apparent that in the presence of MgO, a so-called hydrotalcite phase forms with a composition determined by EDS microanalysis on the Scanning Electron Microscope of close to Mg ₀.₇₅Al _{0.2}(H₂O)ₓ. With clays rich in MgO, such as saponite or vermiculite, it has been found that a more general molar ratio of;
(0.14MgO + Na₂O_{eq} + SO₃ + CO₂) / Al₂O₃ = 1
(where Na₂O_{eq} = Na₂O + 0.65K₂O)
needs to be targeted for maximum strengths.

### Example 6

It has also been found that if the clay is heat-treated to very high temperatures in excess of 1100ºC to form a glass of similar composition, then the same general relationships are found between strengths and chemical composition as shown by this example.

**Table 5**

| | | | | | **Reference cement** |
|---|---|---|---|---|---|
| Limestone [%], Ground separately to an Blaine surface area of 1143 m²/kg | 100 | 50 | 0 | 50 | 0 |
| Calcined "Holmehus" clay [%], Ground separately to an Blaine surface area of 924 m² | 0 | 50 | 100 | 0 | 0 |
| % Glass produced at 1300ºC from Holmehus" clay and rapidly cooled in air and ground to a specific surface of 1009 m2/kg | 0 | 0 | 0 | 50 | 0 |
| 28 day cement strength [MPa] | 48 | 57 | 44 | 66 | 64 |

At clinker contents of less than 60 weight %, the same general relationship between the maximum strength and the molar ratio, (0.14MgO + Na₂O_{eq} + SO₃ + CO₂) / Al₂O₃ described above were found for glasses produced from clay provided they were ground to sufficient surface area of greater than 300 m²/kg.

## Claims

1. A cement comprising Portland cement clinker and a clinker replacement material, wherein the clinker replacement material comprises a carbonate material and a clay material, the clay material being **characterised in that** the carbonate material and/or the clay material has been treated in such a way that no chemical reaction occurs between the clay material and the carbonate material.

2. A cement as defined in claim 1, wherein the clay material has been heat-treated separately before mixing with the carbonate material.

3. A cement according to claim 1, wherein the carbonate material and the clay material have been calcined in a mixture at a temperature of less than 800°C, and preferably less than 700 °C.

4. A cement according to any claims 1-2, wherein the clay material has been transformed to a calcium aluminosilicate glass.

5. A cement according to any claims 1-3, wherein the clay material is calcined clay.

6. A cement according to any of the above claims 1-2, wherein the calcined clay is produced by heat-treating clay separate from the other constituents of the clinker replacement material at a temperature sufficient to a) dehydroxylate the clay to a chrystallographically amorphous material, and b) prevent the formation of high temperature alumino-silicate phases such as mullite.

7. A cement according to any of the preceding claims, wherein the cement comprises 5 to 90 %, preferably 10 to 90%, more preferably 15 to 90% of clinker replacement material.

8. A cement according to any of the preceding claims, wherein the ratio of calcined clay to carbonate material in the clinker replacement material is between 0.03 and 0.95, preferably 0.03 to 0.75, more preferably 0.03 to 0.50, in particular 0.03 to 0.25.

9. A cement according to any of the preceding claims 1-8, wherein the cement further comprises an alkali sulphate, preferably selected among Na₂SO₄, K₂SO₄, aphthitalite (Na,K)₂(SO₄)₂, calcium-langbeinite Ca₂K₂(SO₄)₃, or mixtures or hydrated products thereof.

10. Concrete material comprising cement according to any of the preceding claims.

11. Method of producing a cement comprising Portland cement clinker and a clinker replacement material comprising the steps of a) providing a carbonate material and a clay material, b) treating said carbonate material and said clay material, optionally in a mixture, in such a way that no chemical reaction occurs between the clay minerals and the carbonate material when subsequently mixed, c) mixing said carbonate material and said clay material, and d) blending the mixture of a carbonate material and a clay material with a Portland cement clinker.

12. A method according to claim 11, wherein the clay material is heat-treated separately before mixing with the carbonate material.

13. A method according to claim 11, wherein the carbonate material and the clay material are calcined in a mixture at a temperature of less than 800°C, and preferably less than 700 °C.

14. A method according to any of the preceding claims 11-13, said method further comprising a step wherein an alkali sulphate is added to the cement.

15. Use of a clinker replacement material as defined in any of the preceding claims 1 - 9 for the production of cement with a reduced emission of CO₂.
